# EUROPEAN PATENT SPECIFICATION

(11) **EP 2 769 805 B1**
(45) Date of publication and mention of the grant of the patent: **19.08.2015**
(21) Application number: 13156332.2
(22) Date of filing: 22.02.2013
(51) Int. Cl.: B23Q 11/00, B24B 41/04

(54) **A balancing device for rotating bodies**
Wuchtvorrichtung für drehende Körper
Dispositif d`équilibrage de corps en rotation

(43) Date of publication of application: 27.08.2014
(73) Proprietor: Balance Systems S.r.L., 20145 Milano (IT)
(72) Inventor: Trionfetti, Gianni, I - 20041 AGRATE BRIANZA (Milano) (IT)
(74) Representative: Lunati & Mazzoni S.r.L.

(56) References cited:
- EP-A1- 0 124 306
- EP-A1- 0 460 282
- EP-A1- 1 645 362
- DE-A1-102009 049 556
- US-A- 5 354 186

## Description

The present invention relates to a balancing device for rotating bodies of the type as recited in the preamble of Claim 1, as for example known from EP-A-1645362. Balancing devices for rotating bodies and in particular for precision instruments, such as grinders and the like, which comprise a rotor portion which is placed in rotation, around an axis, at elevated angular speeds are currently known of.

The balancing devices are suitable for balancing said rotor portion, that is to shift the centre of mass of the latter positioning it substantially on the axis of rotation. They are therefore needed to prevent the creation of vibrations generated by centrifugal forces in the presence of an imbalance of said rotor portion, which might lead to damage of the machine comprising said rotor portion, or to undesirable effects.

In particular, when the machine in question is a machine tool, undesirable vibrations may lead to an incorrect detection of any contact between the grinder or tool and the piece being machined, to machining inaccuracies and yet other drawbacks.

Said balancing devices are placed inside or integral with the rotor portion and comprise offset masses positionable, preferably by drive means such as electric motors, in positions such as to create a null imbalance or equal and opposite to the imbalance of the remaining part of the rotor portion, so as to balance the latter.

They are generally a substantially cylindrical shape and are positioned in such a way that the cylinder axis coincides with the rotation axis of the balancing device, so as to be able to present configurations with null imbalance if the rotor portion is already in itself balanced.

Said balancing devices known in the prior art have significant drawbacks.

They are in fact very complex and therefore expensive and subject to malfunction, in particular on account of the very great centrifugal forces which are created on the single elements.

A further drawback lies in the fact that the balancing devices are not always sufficiently accurate. For many applications, such as grinders, extreme accuracy is in fact required.

Moreover, when an acceptable level of accuracy is achieved this is to the detriment of the maximum balancing capacity.

Moreover, the functioning of the devices of the prior art is complex and takes a long time to activate.

In this situation the technical task of the present invention is to devise a balancing device for rotating bodies able to substantially overcome the drawbacks mentioned above.

Another important aim of the invention is to make a simple and robust balancing device.

A further purpose of the invention is to obtain a highly accurate balancing device without foregoing high balancing capacities.

The technical task and specified aims are resolved by a balancing device for rotating bodies of the type described in Claim 1.

Preferred and advantageous solutions are described in the other claims, in the specification and in the drawings.

The characteristics and advantages of the invention are more clearly evident from the following detailed description of a preferred embodiment thereof, with reference to the accompanying drawings, in which:
**Fig. 1** shows a schematic side view of a first example of balancing device according to the invention;
**Fig. 2** shows a schematic front view of the first example of balancing device according to the invention;
**Fig. 3** shows a schematic side view of a second example of balancing device according to the invention;
**Fig. 4** shows a schematic front view of the second example of balancing device according to the invention.

With reference to said drawings, reference numeral **1** globally denotes the balancing device according to the invention.

It is suitable to be positioned integrally with a rotating body **20.**

The rotating body 20 is preferably a tool, more preferably a grindstone, and even more preferably a grinder, or a numerical control milling cutter and the like. The rotating body 20 and the device 1 are thus part of the rotor of a machine, preferably of a machine tool, which is suitable to place the rotor in rotation around a main rotation axis **20a.** The machine is further fitted with a stator, fixed in relation to the rotation of the rotor.

Said balancing device 1 is in addition suitable to form part of a balancing apparatus **10** controlled by said machine. In particular, the device 1 constitutes the rotor portion of the balancing apparatus 10.

The latter further suitably comprises a fixed portion **11,** control means **12** of the balancing apparatus 10 and imbalance detection means.

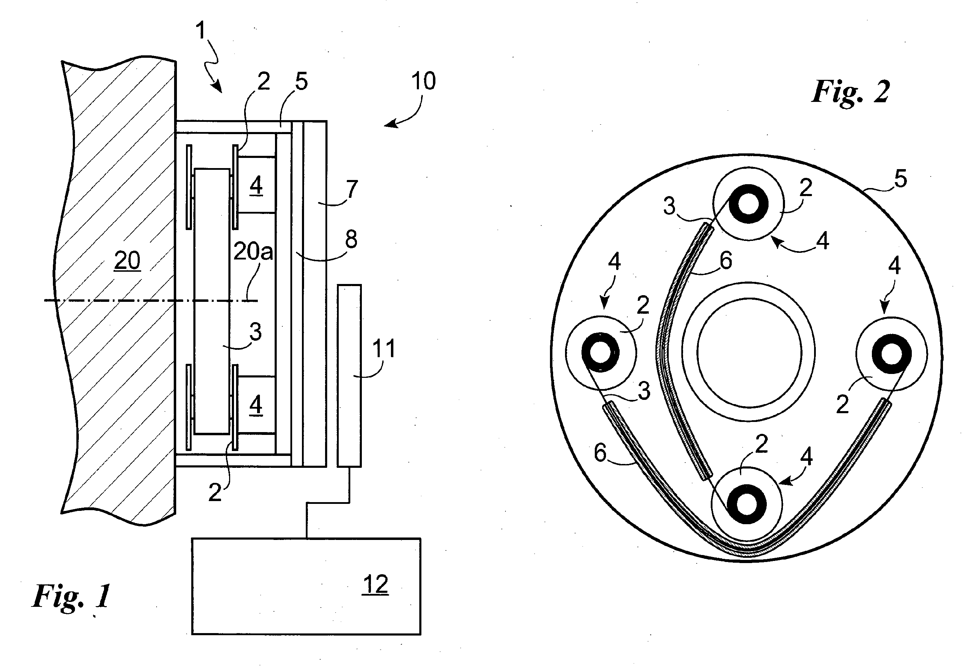

More in detail the fixed portion 11 is suitable to transmit the signals and the power supply to the device 1, preferably by means of contact-free connections, such as inductive connections and the like. An example of such a wireless connection is described in the patent IT-A-MI5090100 (see pg. 3 line 23 to pg. 8 line 10 and Figures 1, 3 and 4) issued to the same Applicant.

The control means **12** are instead appropriately connected via cable to the fixed portion 11, and permit the computerised control of the entire balancing apparatus 10 and control by the user. The latter are in themselves known.

The imbalance detection means, not shown in the drawings, comprise piezoelectric sensors and similar devices suitable to detect any vibrations caused by imbalances in the rotor of the machine described. These are in functional connection with the control means 12 and, preferably, are of the type described in the patent EP-A-1645362 (paragraphs [0031]-[0082], Fig. 1 and Figures 5-10) issued to the same Applicant.

The balancing device 1 comprises a main axis, suitable to constitute the rotation axis of the device 1 and thus to coincide with the main rotation axis 20a of the rotating body 20.

The device 1 further comprises, in brief: a plurality of storage means **2** arranged in positions offset to the main rotation axis 20a, at least one element suitable for winding **3** wound in correspondence with several storage means 2, and transfer means **4** suitable for winding the elements suitable for winding 3 around the storage means 2.

Consequently the transfer means 4 are suitable to vary the distribution of the mass of the elements suitable for winding 3 over several storage means 2. By varying the distribution of the masses the centre of mass of the device 1 and of the connected rotating body 20 is varied. These are thus suitable to balance the rotating body 20.

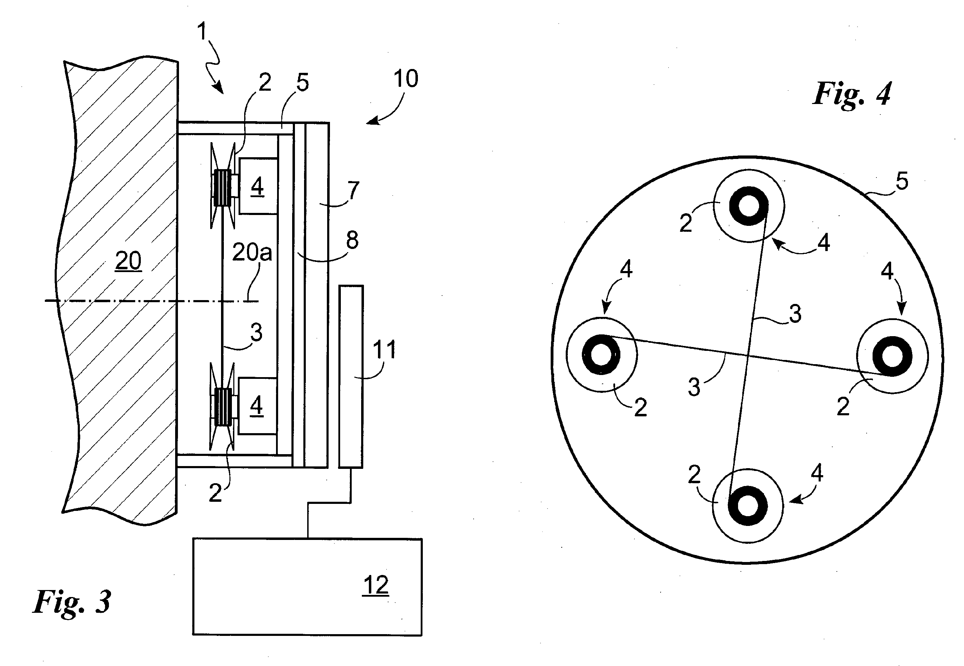

More in detail the elements suitable for winding 3 are preferably composed of bands (Fig. 1 and Fig. 2) or, when of a greatly reduced width, of wires (Fig. 3 and Fig. 4). Said bands or wires are preferably made from metallic material and more preferably from steel, preferably harmonic or the like. In particular the bands preferably have a width of 0.5 cm to 2 cm and a thickness of 0.1 mm to 0.01 mm. The wires rather have a diameter to the order of magnitude of tenths of millimetres. In particular the mass per unit of length of a band is 1 g/m to 20 g/m, while in particular the mass per unit of length of a wire is 0.05 g/m to 1 g/m.

Alternatively the element suitable for winding 3 may comprise masses positioned at periodic distances and the like.

The elements suitable for winding 3 and the transfer means 4 are preferably paired, in particular each transfer means 4 is placed in correspondence with a storage means 2 and moreover, appropriately, each storage means 2 is placed in correspondence with a transfer means 4.

The transfer means 4 are preferably electric rotary motors inside the device 1 or, alternatively, sliding blocks or bearings which permit the winding of the elements 3 to be controlled from outside. These are suitable to wind the elements 3 in traction. In one alternative the transfer means 4 are suitable to unwind the elements 3 in compression, in particular if the elements 3 are not crushed if compressed as a result of comprising extremely accurate guides. In this latter case, a single transfer means 4 can be controlled by a pair of storage means 2. The storage means 2 are substantially storage reels of the bands or wires or similar elements. They have an appropriate width of 0.5 cm to 3 cm and lateral flanges suitable to contain and channel the elements suitable for winding 3.

The storage means 2 are in offset positions, that is each one of them singly has a centre of mass not coinciding with the axis 20a, in such a way as to perform the balancing. They are preferably four in number and substantially arranged according to a rotational symmetry, in relation to the axis 20a and in the plane perpendicular to said axis 20a, of right angles. Thanks to such arrangement the storage means can balance any imbalance in the plane of the rotating body 20 and achieve a simple construction of the device 1

The storage means 2 present may even be six in number and preferably arranged according to a rotational symmetry, in relation to the axis 20a and in the plane perpendicular to said axis 20a, of angles of 60°. Thanks to such arrangement the storage means can balance any imbalance in the plane of the rotating body 20 and achieve a greater balancing mass, suitable to balance greater imbalances.

In correspondence with the storage means 2 sensors may be present suitable to measure the quantity of elements suitable for winding 3 wound or the proximity of the end of the element suitable for winding 3, appropriately by means of special markers inserted in said element suitable for winding 3 or the like.

The device 1 further comprises a containment body **5** suitable to contain the elements composing said device 1. The containment body 5 is, appropriately, a cylinder (Fig. 4) or ring (Fig. 2) shape, in this latter case it may be positioned astride the rotation shaft supporting the rotating body 20.

Inside the containment body 5 guides **6** are preferably also present for the elements suitable for winding 3. The guides 6 may be composed of hollow portions inside the containment body 5, or even of various guide elements such as rollers, columns or the like. They design trajectories permitting the elements suitable for winding 3 not to interfere with each other. In particular when the elements suitable for winding 3 are bands the guides 6 design trajectories which do not intersect in the plane perpendicular to the main axis 1a external to the storage means 2, as shown in Fig. 2.

On the contrary, elements suitable for winding 3 composed of wires, given their reduced thickness, can intersect in the plane perpendicular to the main axis 1a, as shown in Fig. 4. In the case in which the elements 3 are wires and the body 5 is without cavities for the shaft, the guides 6 may be absent (Fig. 4).

The device 1 further comprises reception means **7** suitable for being connected for the transfer of data and power with the fixed portion 11 described of the balancing apparatus 10. The reception means 7 thus preferably comprise contact-free induction connection means and the like.

The device 1 lastly comprises control means **8**, on board the device 1, composed of electronics suitable to perform the control and command of said device 1.

The functioning of the balancing device 1 described above in a structural sense, is as follows.

When the machine is activated the rotor is placed in rotation and fitted with the balancing apparatus 10 comprising the balancing device 1 connected to the rotor.

The imbalance detection means detect any imbalances and transmit the information to the control means 12, which transmit the information to the fixed portion 11 which without contact transmits it to the reception means 7 and from here to the control means 8 on board the device 1.

Such devices activate the rotation of the transfer means 4 which transport, by winding and unwinding, the elements suitable for winding between the various storage means 2, consequently distributing the masses so as to balance any imbalances.

The balancing device 1 according to the invention achieves some important advantages.

In fact, it is extremely accurate. In detail, given that the motors which constitute the transfer means 4 can be controlled by fractions of a revolution and given the dimensions described of the storage means 2 and the masses described per unit of length of the elements 3, it is possible to command variations of mass between the storage means 2 to the order of magnitude of hundredths of grams.

The device 1 further achieves an elevated maximum balancing capacity; it is thus suitable to balance imbalances of significant size.

The device 1 has, in addition, a very simple structure if compared to the known balancing devices. Said device is therefore economical and less subject to malfunctioning.

Modifications and variations may be made to the invention described herein without departing from the scope of the inventive concept as defined by the claims. All details may be replaced with equivalent elements and the scope of the invention includes all other materials, shapes and dimensions.

## Claims

1. Balancing device (1) suitable for being positioned integrally to a rotating body (20) suitable to be placed in rotation around a rotation axis (20a), **characterised in that** it comprises: a plurality of storage means (2) arranged in positions offset to said main rotation axis (20a), at least one element suitable for winding (3) wound in correspondence with a plurality of said storage means (2), transfer means (4) suitable to wind said elements suitable for winding around said storage means (2) and consequently to vary the distribution of the mass of said at least one element suitable for winding (3) over several of said storage means (2) so as to balance the mass of said rotating body (20).

2. Balancing device (1) as claimed in claim 1, wherein said transfer means (4) are rotary motors and wherein each one thereof is placed in correspondence with one of said storage means (2).

3. Balancing device (1) as claimed in one or more of the preceding claims, wherein each one of said storage means (2) is placed in correspondence with one of said transfer means (4).

4. Balancing device (1) as claimed in one or more of the preceding claims, wherein said elements suitable for winding (3) are wound in correspondence with two of said storage means (2).

5. Balancing device (1) as claimed in one or more of the preceding claims, wherein said storage means (2) are four in number and arranged according to a rotational symmetry, in relation to said axis (20a) and in a plane perpendicular to said axis (20a), of right angles.

6. Balancing device (1) as claimed in one or more of the preceding claims, wherein said storage means (2) are six in number and arranged according to a rotational symmetry, in relation to said axis (20a) and in a plane perpendicular to said axis (20a), of angles of 60°.

7. Balancing device (1) as claimed in one or more of the preceding claims, wherein said elements suitable for winding (3) are metal bands.

8. Balancing device (1) as claimed in the previous claim, wherein said elements suitable for winding (3) are metal wires.

9. Balancing device (1) as claimed in one or more of the preceding claims, comprising a cylindrical containment body (5), suitable for constituting the outer casing of said balancing device.

10. Balancing device (1) as claimed in the previous claim, wherein said containment body (5) is hollow.

11. Balancing apparatus (10) comprising a balancing device (1) as claimed in one or more of the preceding claims, a fixed portion (11), suitable to transmit the signals and the power supply to said balancing device (1), control means (12) of said balancing apparatus 10 and imbalance detection means.

## Patentansprüche

1. Wuchtvorrichtung (1), die geeignet ist, in Verbindung mit einem drehenden Körper (20) positioniert zu werden, der geeignet ist, um eine Drehachse (20a) in Drehung versetzt zu werden, die sich durch Folgendes auszeichnet: eine Vielzahl an im Verhältnis zu der genannten Drehachse (20a) versetzt angeordneten Sammelelementen (2), mindestens ein aufspulbares Element (3), das auf einer Vielzahl dieser Sammelelemente (2) aufgespult ist, Übertragungselemente (4), die geeignet sind, die genannten aufspulbaren Elemente (3) um die genannten Sammelelemente (2) zu wickeln und dadurch die Verteilung des Gewichts des genannten mindestens einen aufspulbaren Elements (3) auf mehreren der genannten Sammelelemente (2) so zu ändern, dass das Gewicht des genannten drehenden Körpers (20) ausgewuchtet wird.

2. Wuchtvorrichtung (1) nach Anspruch 1, bei der die Übertragungselemente (4) Drehmotoren sind und bei der jeder von diesen auf einem der genannten Sammelelemente (2) positioniert ist.

3. Wuchtvorrichtung (1) nach einem oder mehreren der vorangegangenen Ansprüche, bei der jedes der genannten Sammelelemente (2) auf einem der genannten Übertragungselemente (4) positioniert ist.

4. Wuchtvorrichtung (1) nach einem oder mehreren der vorangegangenen Ansprüche, bei der die genannten aufspulbaren Elemente (3) auf zwei der genannten Sammelelemente (2) aufgespult sind.

5. Wuchtvorrichtung (1) nach einem oder mehreren der vorangegangenen Ansprüche, bei der vier von den genannten Sammelelementen (2) vorliegen, die nach einer rationalen Symmetrie, im Verhältnis zu der genannten Achse (20a) und in einer senkrechten Ebene zu der genannten Achse (20a), von rechten Winkeln angeordnet sind.

6. Wuchtvorrichtung (1) nach einem oder mehreren der vorangegangenen Ansprüche, bei der sechs von den genannten Sammelelementen (2) vorliegen, die nach einer rationalen Symmetrie, im Verhältnis zu der genannten Achse (20a) und in einer senkrechten Ebene zu der genannten Achse (20a), von 60°-Winkeln angeordnet sind.

7. Wuchtvorrichtung (1) nach einem oder mehreren der vorangegangenen Ansprüche, bei der die aufspulbaren Elemente (3) Metallbänder sind.

8. Wuchtvorrichtung (1) nach einem oder mehreren der vorangegangenen Ansprüche, bei der die aufspulbaren Elemente (3) Metalldrähte sind.

9. Wuchtvorrichtung (1) nach einem oder mehreren der vorangegangenen Ansprüche, die einen zylindrischen Umhüllungskörper umfasst, der geeignet ist, die Außenhülle der genannten Wuchtvorrichtung zu bilden.

10. Wuchtvorrichtung (1) nach dem vorangegangenen Anspruch, bei der der Umhüllungskörper (5) hohl ist.

11. Auswuchtgerät (10), das eine Wuchtvorrichtung (1) nach einem oder mehreren der vorangegangenen Ansprüche, einen festen Abschnitt (11), der geeignet ist, die Signale und die Stromversorgung an die genannte Wuchtvorrichtung (1) zu übertragen, Steuerelemente (12) des genannten Auswuchtgeräts (10) und Mittel zum Erfassen von Unwuchten umfasst.

## Revendications

1. Dispositif d'équilibrage (1) apte à être positionné de façon solidaire d'un corps en rotation (20) apte à être mis en rotation autour d'un axe de rotation (20a), **caractérisé en ce qu'**il comprend : une pluralité de moyens d'accumulation (2) placés sur des positions désaxées par rapport audit axe de rotation (20a), au moins un élément enroulable (3) enroulé au niveau d'une pluralité desdits moyens d'accumulation (2), moyens de transfert (4) apte à enrouler lesdits éléments enroulables (3) autour desdits moyens d'accumulation (2) et à varier en conséquence la répartition de la masse dudit au moins un élément enroulable (3) sur plusieurs desdits moyens d'accumulation (2) de façon apte à équilibrer la masse dudit corps en rotation (20).

2. Dispositif d'équilibrage (1) selon la revendication 1, dans lequel lesdits moyens de transfert (4) sont des moteurs rotatifs et dans lequel chacun d'eux est placé au niveau d'un desdits moyens d'accumulation (2).

3. Dispositif d'équilibrage (1) selon une ou plusieurs des revendications précédentes, dans lequel chacun desdits moyens d'accumulation (2) est placé au niveau d'un desdits moyens de transfert (4).

4. Dispositif d'équilibrage (1) selon une ou plusieurs des revendications précédentes, dans lequel lesdits éléments enrouleurs (3) s'enroulent au niveau de deux desdits moyens d'accumulation (2).

5. Dispositif d'équilibrage (1) selon une ou plusieurs des revendications précédentes, dans lequel lesdits moyens d'accumulation (2) sont présents au nombre de quatre et placés selon une symétrie de rotation, par rapport audit axe (20a) et sur un plan perpendiculaire audit axe (20a), d'angles droits.

6. Dispositif d'équilibrage (1) selon une ou plusieurs des revendications précédentes, dans lequel lesdits moyens d'accumulation (2) sont présents au nombre de six et placés selon une symétrie de rotation, par rapport audit axe (20a) et sur un plan perpendiculaire audit axe (20a), d'angle de 60°.

7. Dispositif d'équilibrage (1) selon une ou plusieurs des revendications précédentes, dans lequel lesdits éléments enroulables (3) sont des bandes métalliques.

8. Dispositif d'équilibrage (1) selon la revendication précédente, dans lequel lesdits éléments enroulables (3) sont des fils métalliques.

9. Dispositif d'équilibrage (1) selon une ou plusieurs des revendications précédentes, comprenant un corps de rétention (5) cylindrique, apte à constituer l'enveloppe extérieure dudit dispositif d'équilibrage.

10. Dispositif d'équilibrage (1) selon la revendication précédente, dans lequel ledit corps de rétention (5) est creux.

11. Appareil d'équilibrage (10) comprenant un dispositif d'équilibrage (1) selon une ou plusieurs des revendications précédentes, une partie fixe (11), apte à transmettre les signaux et l'alimentation électrique audit dispositif d'équilibrage (1), moyens de contrôle (12) dudit appareil d'équilibrage (10) et moyens de détection des déséquilibres.
